# EUROPÄISCHE PATENTSCHRIFT

(11) **EP 1 486 461 B1**
(45) Veröffentlichungstag und Bekanntmachung des Hinweises auf die Patenterteilung: **08.08.2007**
(21) Anmeldenummer: 04012014.9
(22) Anmeldetag: 21.05.2004
(51) Int. Cl.: C01B 33/18, C08K 3/36, B01J 32/00, C09D 7/00

(54) **Flammenhydrolytisch hergestelltes Siliciumdioxid, Verfahren zu seiner Herstellung und Verwendung**
Silicon dioxide prepared by flame hydrolysis, process for its preparation and use thereof
Dioxyde de silicium préparé par hydrolyse à la flamme, procédé pour sa préparation et son utilisation

(30) Priorität: 10.06.2003 DE 10326049
(43) Veröffentlichungstag der Anmeldung: 15.12.2004
(73) Patentinhaber: Degussa GmbH, 40474 Düsseldorf (DE)
(72) Erfinder: Mangold, Helmut, Dr., 63517 Rodenbach (DE); Rochnia, Matthias, Dr., 63683 Ortenberg (DE)

(56) Entgegenhaltungen:
- EP-A- 0 038 900
- EP-A- 0 044 903
- EP-A- 0 855 368
- DE-A- 2 904 199

## Beschreibung

Die Erfindung betrifft ein flammenhydrolytisch hergestelltes Siliciumdioxidpulver, dessen Herstellung und Verwendung.

Es ist bekannt, Siliciumdioxid durch Flammenhydrolyse herzustellen. Dabei wird beispielsweise ein Gemisch aus dem Dampf eines Siliciumdioxid-Precursors, eines Brenngases und eines Sauerstoff enthaltenden Gases in einem gekühlten Verbrennungsraum verbrannt. In der Regel werden dabei Siliciumhalogenide, Organochlorsilane oder Mischungen hiervon eingesetzt. Die Knallgasflamme des Brenners liefert dabei sowohl die Energie, als auch die für die Hydrolyse des Siliciumdioxid-Precursors benötigte Wassermenge. Durch Variation der Siliciumdioxid-Precursorkonzentration, der Flammtemperatur, des Brenngas/Luft-Verhältnisses und der Verweilzeit in der Flamme und im Verbrennungsraum können die Teilchengröße, die Teilchengrößenverteilung, die spezifische Oberfläche und die Oberflächenbeschaffenheit des Siliciumdioxides in weiten Grenzen beeinflusst werden.

Aus DE-A-2909815 ist bekannt, bei der Flammenhydrolyse Siliciumdioxid-Precursor, Brenngas, Sauerstoff enthaltendes Gas und Wasserdampf vor der Verbrennung zu mischen. Dieses Verfahren ist jedoch für einen großtechnischen Einsatz nicht geeignet, weil Teile des Organochlorsilans bereits vorzeitig von dem eingebrachten Wasserdampf zu Siliciumdioxid hydrolysiert werden, welches in kürzester Zeit die Zuführungsrohre in die Brennkammer verstopft. DE-A-2909815 gibt ferner keine Hinweise, inwieweit die zugesetzte Menge an Wasserdampf die physikalisch-chemischen Eigenschaften des Siliciumdioxides beeinflusst.

Aus DE-A-2904199 ist bekannt, dass bei der Flammenhydrolyse von Siliciumhalogeniden, oder Organochlorsilanen über den aus der Reaktion eines Brenngases mit Sauerstoff entstandenen Wasserdampf hinaus, zusätzlich Wasserdampf, bevorzugt in einer Menge zwischen 0,1 und 1 kg Wasser pro kg Ausgangsverbindung, in den Brenner oder in die Flamme zugeführt wird. Darunter ist zu verstehen, dass mindestens die stöchiometrisch nötige Menge Wasser zur vollständigen Hydrolyse des Siliciumdioxid-Precursors aus der Reaktion von Sauerstoff und Brenngas bereitgestellt wird und darüber hinaus zusätzlich Wasserdampf dem System zugeführt wird.

Der Wasserdampf kann gemäß DE-A-2904199 in Form eines Gemisches mit a) dem Brenngas oder b) einem Sauerstoff enthaltenden Gas zugeführt werden. Weiterhin kann er c)vor der Verbrennung mit den Reaktionspartnern gemischt oder d) direkt in die Flamme eingeleitet werden. Die Varianten a)-c) weisen den Nachteil auf, dass der Siliciumdioxid-Precursor vorzeitig hydrolysiert wird und es zu Anbackungen von Siliciumdioxid kommt. Ein solches Verfahren ist wirtschaftlich nicht sinnvoll durchzuführen. Die Variante d) vermeidet diesen Nachteil und ermöglicht es Siliciumdioxidpulver herzustellen mit variabler BET-Oberfläche und Verdickungswirkung herzustellen.

Die Verdickungswirkung spielt bei Verwendung von Siliciumdioxidpulvern als Verdickungs- und Thixotropierungsmittel eine wesentliche Rolle. Wesentlich für diese Anwendungen ist weiterhin die Einarbeitbarkeit dieser Pulver in flüssige Medien. DE-A-2904199 beschreibt zwar Siliciumdioxidpulver mit hoher Verdickungswirkung, lässt aber dabei den Aspekt der Einarbeitbarkeit außer Betracht. Eine hohe Verdickungswirkung ist nur dann in Anwendungen vorteilhaft einzusetzen, wenn das Siliciumdioxidpulver sich auch leicht einarbeiten lässt.

Aufgabe der Erfindung ist es ein Siliciumdioxidpulver bereitzustellen, welches eine hohe Verdickungswirkung und eine gute Einarbeitbarkeit aufweist. Aufgabe der Erfindung ist es weiterhin ein Verfahren zur Herstellung des Siliciumdioxidpulvers bereitzustellen.

Gegenstand der Erfindung ist ein flammenhydrolytisch hergestelltes Siliciumdioxidpulver mit einer BET-Oberfläche zwischen 10 und 600 m²/g, dadurch gekennzeichnet, dass es eine Verdickungswirkung von wenigstens 3000 mPas und einen Grindometerwert kleiner als 40 µm aufweist, wobei man zur Bestimmung der Verdickungswirkung 7,5 g Siliciumdioxidpulver in 142,5 g einer Lösung eines ungesättigten Polyesterharzes in Styrol mit einer Viskosität von 1300 +/- 100 mPas bei einer Temperatur von 22°C einbringt und mittels eines Dissolvers bei 3000 min⁻¹ dispergiert.

Die Verdickungswirkung (in mPas) wird bestimmt in einer Dispersion eines Siliciumdioxidpulvers in einem Polyester. Die Verdickungswirkung des erfindungsgemäßen Siliciumdioxidpulvers beträgt wenigstens 3000 mPas. In einer bevorzugten Ausführungsform kann die Verdickungswirkung zwischen 3000 und 5000 mPas liegen, wobei Werte zwischen 3200 und 4500 besonders bevorzugt sein können.

Der Grindometerwert ist ein Maß für die Kornfeinheit von Füllstoffen und Pigmenten. Er wird bestimmt mit einem Grindometer. Hierbei wird das zu prüfende Material auf die tiefste Stelle einer in einem Metallblock gegen Null auslaufende, keilförmig eingefrästen Rinne gegeben und mit einem geschliffenen Schaber über deren ganze Länge ausgezogen. Diejenige Stelle, an der sich körniges Material in Form von Riefen in der glattgestrichenen Oberfläche bemerkbar macht, wird als Mahlfeinheit in µm angegeben. Man spricht dabei vom Grindometer-Wert. Er ist ein Maß für die Dispergierbarkeit des Pulvers. Je niedriger der Grindometerwert, desto besser ist die Dispergierbarkeit. Der Grindometerwert des erfindungsgemäßen Siliciumdioxidpulvers ist kleiner als 40 µm. Bevorzugterweise kann der Wert kleiner 35 µm sein, wobei Werte kleiner 30 µm besonders bevorzugt sein können.

Die BET-Oberfläche des erfindungsgemäßen Siliciumdioxidpulvers kann bevorzugt zwischen 50 und 450 m²/g liegen. Besonders bevorzugt können BET-Oberflächen zwischen 200 und 400 m²/g sein.

Es ist wesentlich für das erfindungsgemäße Siliciumdioxidpulver, dass sowohl die Verdickungswirkung als auch der Grindometerwert innerhalb der angegebenen Grenzen liegen. Nur innerhalb dieser Grenzen werden Siliciumdioxidpulver erhalten, die eine hohe Verdickungswirkung bei gleichzeitiger guter Einarbeitbarkeit (Dispergierbarkeit) zeigen.

Ein weiterer Gegenstand der Erfindung ist ein Verfahren zur Herstellung des erfindungsgemäßen Siliciumdioxidpulvers, welches dadurch gekennzeichnet ist, dass man mindestens einen dampfförmigen Siliciumdioxid-Precursor in Gegenwart eines freien Sauerstoff enthaltenden Gases, eines Brenngases und Wasserdampf verbrennt, wobei der Wasserdampf über ein im Brenner zentral angebrachtes Rohr welches umschlossen ist von der Zuführung der Reaktionspartner Siliciumtetrachlorid, Wasserstoff und Luft, in das vorgemischte Gasgemisch enthaltend einen dampfförmige Siliciumdioxid-Precursor, das freien Sauerstoff enthaltende Gas und ein Brenngas, eingebracht wird, und das Reaktionsgemisch in der Verbrennungskammer mit angeschlossenem gekühlten Flammrohr zur Reaktion gebracht wird, wobei der lambda-Wert zwischen 1 und 2 liegt, der gamma-Wert zwischen 1 und 2 liegt und der beta-Wert zwischen 2,2 und 3,2 liegt und wobei gilt: lambda = dem Brenner zugeführter Sauerstoff/stöchiometrisch benötigte Sauerstoffmenge, gamma = dem Brenner zugeführter Wasserstoff/ stöchiometrisch benötigte Wasserstoffmenge und beta = Überschuss Wasser/gebildetes Siliciumdioxid.

Die Werte lassen sich bei Verwendung anderer Gase entsprechend variieren. Eine ausführlichere Beschreibung der lambda- und gamma-Werte ist in EP-A-855368 gegeben.

Überschuss bedeutet den über den stöchiometrisch nötigen Anteil zur Hydrolyse des Siliciumdioxid-Precursors hinausgehenden Anteil an Wasser.

Folgende Beispiele sollen den beta-Wert weiter erläutern: 5,2 kg/h (0,0306 kmol/h) Siliciumtetrachlorid werden zusammen mit 2,32 m³/h (0,104 kmol/h) Wasserstoff und 7,3 m³/h (0,068 kmol/h) Luft, jedoch ohne zusätzlichen Wasserdampf verbrannt. Die stöchiometrisch notwendige Menge an Wasser zur Hydrolyse des Siliciumtetrachlorids ist 2 x 0,0306 kmol/h = 0,0612 kmol/h. Aus der Reaktion von Wasserstoff und Sauerstoff ergeben sich 0,104 kmol/h Wasser. Der Überschuss an Wasser beträgt demnach (.0,104 - 0,0612) kmol/h = 0,0428 kmol/h. Der beta-Wert ergibt sich demnach zu beta = 0,0428/0,0306 = 1,39.

Werden zusätzlich 500 g/h (0,0278 kmol/h) Wasserdampf eingespeist, ergibt sich zusammen mit dem Wasser aus der Reaktion von Wasserstoff mit Sauerstoff, insgesamt 0,1318 kmol/h Wasser und damit ein Überschuss von (0,1318 - 0,0612) kmol/h = 0,0706 kmol/h Wasser. Daraus errechnet sich ein beta-Wert von 0,0706/0,0306 = 2,31.

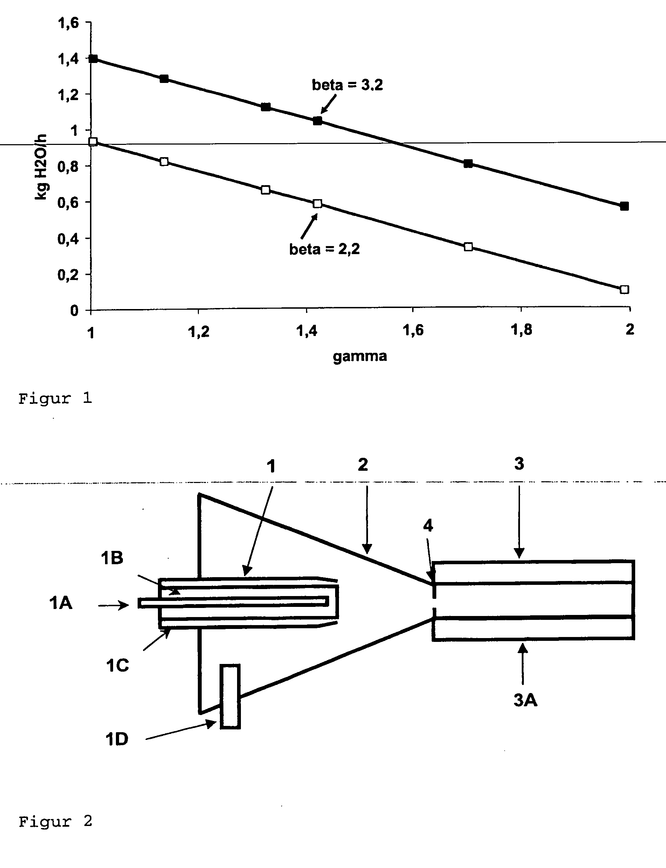

Figur 1 zeigt den Zusammenhang zwischen dem gamma-Wert und der zugesetzten Wassermenge ausgehend von einem Beispiel in dem 4,00 kg/h Siliciumtetrachlorid in Gegenwart von 2,10 kg/h Wasserstoff bei einem lambda-Wert von 1,16 verbrannt werden. Der Bereich zwischen den beiden Geraden stellt den Bereich dar, in dem das erfindungsgemäße Siliciumdioxidpulver erhalten wird. Man erkennt, dass bei hohen gamma-Werten (maximal 2) wenig Wasser zugeführt werden muss, bei niedrigen gamma-Werten (minimal 1) viel Wasser zugesetzt werden muss, um in diesem Bereich zu bleiben. Bei Einstellungen unterhalb der unteren Geraden und oberhalb der oberen Geraden werden keine erfindungsgemäßen Siliciumdioxidpulver erhalten.

Als Brenngase können Wasserstoff, Methan, Ethan, Propan, Butan, Erdgas eingesetzt werden, wobei Wasserstoff besonders bevorzugt ist. Bevorzugt kann als sauerstoffhaltiges Gas Luft oder mit Sauerstoff angereicherte Luft eingesetzt werden.

Geeignete Siliciumdioxid-Precursor können sein: Siliciumhalogenide, Organochlorsiliciumverbindungen, Organosiliciumverbindungen. Insbesonders können SiCl₄, CH₃SiCl₃, (CH₃)₂SiCl₂, (CH₃)₃SiCl, (CH₃)₄Si, HSiCl₃, (CH₃)₂HSiCl, CH₃C₂H₅SiCl₂, Disilane mit der allgemeinen Formel RₙCl₃₋ₙSiSiRₘCl₃₋ₘ mit R=CH₃ und n+m = 2,3,4,5 und 6, sowie Gemische der vorgenannten Verbindungen eingesetzt werden.

Organochlorsiliciumverbindungen fallen bei der Umsetzung von Silicium mit Organohalogeniden an (Müller-Rochow-Synthese). Die Fraktionsschnitte der Destillation enthalten unterschiedliche Mengen der vorgenannten Organohalogensilicium-Verbindungen und Organosiliciumverbindungen, die gegebenenfalls noch Anteile von C₁-C₁₂- Kohlenwasserstoffen enthalten können. Der Anteil dieser Kohlenwasserstoffe kann bis zu 10 Gew.-%, bezogen auf eine Fraktion, betragen. Gewöhnlich liegen diese Anteile zwischen 0,01 und 5 Gew.-%, wobei der Anteil der C₆-Kohlenwasserstoffe, beispielsweise cis- und trans-2-Hexen, cis- und trans-3-Methyl-2-penten, 2,3-Dimethyl-2-buten, 2-Methylpentan, 3-Methylpentan in der Regel überwiegt.

Die Destillationsfraktionen der Müller-Rochow-Synthese können in dem erfindungsgemäßen Verfahren eingesetzt werden. Bevorzugt können Mischungen mit einem Kohlenwasserstoffgehalt von bis zu 5 Gew.-% eingesetzt werden. Besonders bevorzugt können Mischungen mit Siliciumtetrachlorid eingesetzt werden.

Weiterhin können zusätzlich Luft und/oder Wasserstoff in die Verbrennungskammer eingespeist werden. Mit diesen Maßnahmen können Temperaturen und Verweilzeiten variiert werden.

Figur 2 zeigt eine schematische Anordnung der Vorrichtung und der Verfahrensströme des erfindungsgemäßen Verfahrens. Die Vorrichtung zur Durchführung des Verfahrens besteht aus den drei Hauptbestandteilen Brenner (1), Verbrennungskammer (2) und Flammrohr (3). Der Brenner enthält ein zentral angebrachtes Rohr (1A) zum Einleiten von Wasserdampf. Um das zentral angebrachte Rohr ist konzentrisch ein Mantelrohr (1B) zum Einbringen des Siliciumdioxid-Precursors, Brenngas und Sauerstoff enthaltendem Gas. Ein um das Mantelrohr 1B angebrachtes weiteres Rohr 1C dient zum optionalen Einbringen von zusätzlichem Brenngas. Der Einlassstutzen 1D dient zum optionalen Einbringen von Luft. Bei Position 3A wird Kühlwasser zugeführt. Position 4 stellt eine Blende dar.

Ein weiterer Gegenstand der Erfindung ist die Verwendung des erfindungsgemäßen flammenhydrolytisch hergestellten Siliciumdioxidpulver zur Herstellung von Dispersionen, als Füllstoff in Kautschuk, Silikonkautschuk und Kunststoffen, zur Einstellung der Rheologie in Farben und Lacken, als Träger für Katalysatoren.

### Beispiele:

Die Verdickungswirkung wird nach folgender Methode bestimmt: 7,5 g Siliciumdioxidpulver werden 142,5 g einer Lösung eines ungesättigten Polyesterharzes in Styrol mit einer Viskosität von 1300 +/- 100 mPas bei einer Temperatur von 22°C eingebracht und mittels eines Dissolvers bei 3000 min⁻¹ dispergiert. Geeignet als ungesättigtes Polyesterharz ist beispielsweise Ludopal^{®} P6, BASF. 60 g dieser Dispersion werden mit weiteren 90 g des ungesättigten Polyesterharzes in Styrol versetzt und der Dispergiervorgang wird wiederholt. Als Verdickungswirkung wird der Viskositätswert in mPas der Dispersion bei 25°C, gemessen mit einem Rotationsviskosimeter bei einer Scherrate von 2,7 s⁻¹, bezeichnet.
Die BET-Oberfläche wird bestimmt nach DIN 66131.

### Beispiel A1:

Das Gemisch aus 4,00 kg/h SiCl₄ in Dampfform, 2,10 m₃/h Wasserstoff und 7,00 m³/h Luft wird entzündet und brennt aus der Austrittsöffnung des Brenners in den Verbrennungsraum und weiter in das gekühlte Flammrohr. Das entstehende Siliciumdioxidpulver wird von den Gasen abgetrennt und entsäuert. Die physikalisch-chemischen Daten des Siliciumdioxidpulvers sind in tabelle 1 angegeben.

Die Beispiele A2-A8 und B1-B7 werden analog A1, jedoch unter Einspeisung von Wasser durchgeführt. Das Wasser wird über ein zentral angebrachtes Rohr, welches umschlossen ist von der Zuführung der Reaktionspartner Siliciumtetrachlorid, Wasserstoff und Luft, zugegeben. Die Einsatzmengen und die physikalisch-chemischen Daten der erhaltenen Siliciumdioxidpulver sind in Tabelle 1 wiedergegeben.

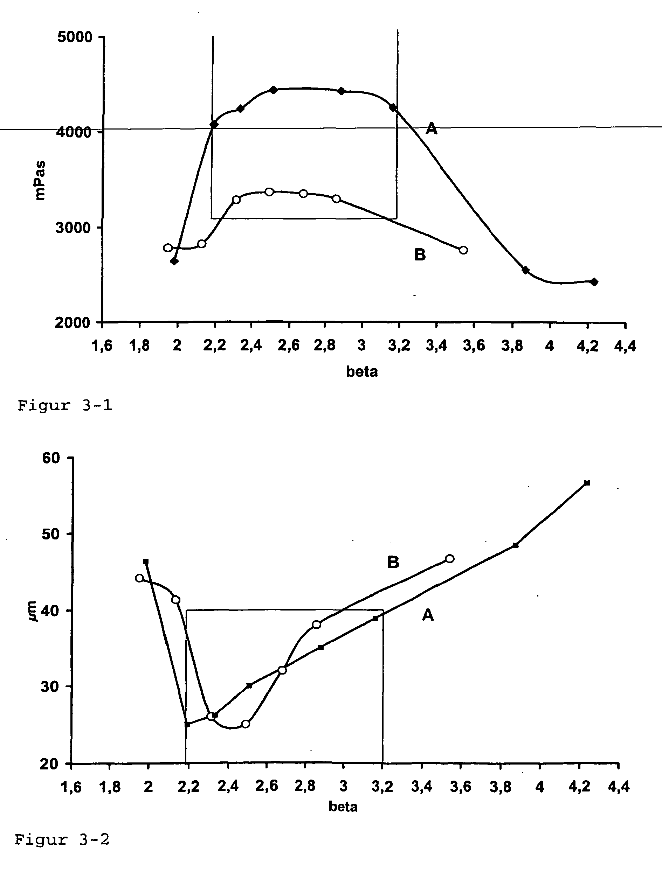

Figur 3-1 zeigt die Verdickungswirkung (in mPas) der Siliciumdioxidpulver aus den Beispielen A und B in Abhängigkeit vom beta-Wert bei einem konstanten gamma-Wert von 1,99 in der Serie A und von 1,43 in der Serie B. Figur 3-2 zeigt die dazugehörigen Grindometerwerte (in *µ*m) in Abhängigkeit vom beta-Wert.

Der Kasten in Figur 3-1 zwischen den beta-Werten 2,2 und 3,2 und der Verdickungswirkung von 3000 mPas gibt den erfindungsgemäßen Bereich wieder. Entsprechend gibt für Figur 3-2 der Kasten den erfindungsgemäßen Bereich zwischen den beta-Werten 2,2 und 3,2 und dem Grindometerwert von weniger als 40 µm wieder.

In den Beispielen C1 und C2 werden als Siliciumdioxid-Precursoren Gemische eingesetzt. In C1 wird ein Gemisch von SiCl₄(90 Gew.-%), MeSiCl₃(9,8 Gew.-%) und Kohlenwasserstoffen(ca. 0,2 Gew.-%) eingesetzt, in C2 ein Gemisch aus MeSiCl₃ (85 Gew.-%), Me₂SiCl₂ (4,7 Gew.-%), MeSiHCl₂(5,3 Gew.-%) und Kohlenwasserstoffen (ca. 5 Gew.-%). Auch mit diesen Precursorgemischen wird ein erfindungsgemäßes Siliciumdioxidpulver erhalten.

**Tabelle 1: Einsatzmengen und physikalisch-chemische Daten von Siliciumdioxidpulvern**

| Beispiel | H₂O zugefügt | SiCl₄ | Wasserstoff | Luft | gamma | lambda | beta | BET | Verdickung | Grindometerwert |
|---|---|---|---|---|---|---|---|---|---|---|
| | g/h | kg/h | m³/h | m³/h | | | | m²/g | mPas | µm |
| A1* | 0 | 4,00 | 2,10 | 7,00 | 1,99 | 1,79 | 1,98 | 218 | 2640 | 46,4 |
| A2 | 90 | 4,00 | 2,10 | 6,85 | 1,99 | 1,73 | 2,19 | 255 | 4075 | 25,0 |
| A3 | 150 | 4,00 | 2,10 | 6,75 | 1,99 | 1,69 | 2,33 | 281 | 4240 | 26,2 |
| A4 | 223 | 4,00 | 2,10 | 6,65 | 1,99 | 1,65 | 2,51 | 317 | 4435 | 30,0 |
| A5 | 380 | 4,00 | 2,10 | 6,30 | 1,99 | 1,51 | 2,88 | 385 | 4430 | 35,0 |
| A6 | 500 | 4,00 | 2,10 | 6,15 | 1,99 | 1,45 | 3,16 | 386 | 4260 | 38,9 |
| A7* | 800 | 4,00 | 2,10 | 5,70 | 1,99 | 1,28 | 3,87 | 418 | 2550 | 48,5 |
| A8* | 955 | 4,00 | 2,10 | 5,30 | 1,99 | 1,11 | 4,23 | 411 | 2430 | 56,7 |
| B1* | 600 | 5,18 | 1,95 | 5,40 | 1,43 | 1,16 | 1,95 | 308 | 2780 | 44,2 |
| B2* | 700 | 5,18 | 1,95 | 5,40 | 1,43 | 1,16 | 2,13 | 322 | 2823 | 41,3 |
| B3 | 800 | 5,18 | 1,95 | 5,40 | 1,43 | 1,16 | 2,31 | 336 | 3289 | 26,0 |
| B4 | 900 | 5,18 | 1,95 | 5,40 | 1,43 | 1,16 | 2,49 | 351 | 3370 | 25,0 |
| B5 | 1000 | 5,18 | 1,95 | 5,40 | 1,43 | 1,16 | 2,68 | 364 | 3355 | 32,0 |
| B6 | 1100 | 5,18 | 1,95 | 5,40 | 1,43 | 1,16 | 2,86 | 376 | 3300 | 38,0 |
| B7* | 1200 | 5,18 | 1,95 | 5,40 | 1,43 | 1,16 | 3,54 | 378 | 2760 | 46,7 |
| C1 | 250 | 4,00 ^{a)} | 1,95 | 6,70 | 1,97 | 1,26 | 2,48 | 310 | 3300 | 32,0 |
| C2 | 800 | 5,18 ^{b)} | 0,55 | 12,50 | 1,96 | 1,05 | 2,70 | 282 | 3050 | 37,0 |

| | | | | | | | | | | |
|---|---|---|---|---|---|---|---|---|---|---|
| *) Vergleichsbeispiel; a)Gemisch bestehend aus: von SiCl₄ (90 Ges.-%), MeSiCl₃ (9,8 Ges.-%) und Kohlenwasserstoffen (ca. 0,2 Ges.-%); b) Gemisch bestehend aus: MeSiCl₃ (85 Ges.-%), Me₂SiCl₂ (4,7 Ges.-%), MeSiHCl₂ (5,3 Ges.-%) und Kohlenwasserstoffen (ca. 5 Gew.-%). | | | | | | | | | | |

## Patentansprüche

1. Flammenhydrolytisch hergestelltes Siliciumdioxidpulver mit einer BET-Oberfläche zwischen 10 und 600 m²/g, **dadurch gekennzeichnet, dass** es eine Verdickungswirkung von wenigstens 3000 mPas und einen Grindometerwert kleiner als 40 *µ*m aufweist, wobei man zur Bestimmung der Verdickungswirkung 7,5 g Siliciumdioxidpulver in 142,5 g einer Lösung eines ungesättigten Polyesterharzes in Styrol mit einer Viskosität von 1300 +/- 100 mPas bei einer Temperatur von 22°C einbringt und mittels eines Dissolvers bei 3000 min⁻¹ dispergiert.

2. Flammenhydrolytisch hergestelltes Siliciumdioxidpulver nach Anspruch 1, **dadurch gekennzeichnet, dass** die BET-Oberfläche zwischen 50 und 450 m²/g liegt.

3. Verfahren zur Herstellung des flammenhydrolytisch hergestellten Siliciumdioxidpulver gemäß den Ansprüchen 1 oder 2, **dadurch gekennzeichnet, dass** man mindestens einen dampfförmigen Siliciumdioxid-Precursors in Gegenwart eines freien Sauerstoff enthaltenden Gases, eines Brenngases und Wasserdampf zur Reaktion bringt, wobei der Wasserdampf über ein im Brenner zentral angebrachtes Rohr, welches umschlossen ist von der Zuführung der Reaktionspartner Siliciumtetrachlorid, Wasserstoff und Luft, in das vorgemischte Gasgemisch enthaltend einen dampfförmige Siliciumdioxid-Precursor, das freien Sauerstoff enthaltende Gas und ein Brenngas, eingebracht wird und das Reaktionsgemisch in der Verbrennungskammer mit angeschlossenem gekühlten Flammrohr zur Reaktion gebracht wird, wobei der lambda-Wert zwischen 1 und 2 liegt, der gamma-Wert zwischen 1 und 2 liegt und der beta-Wert zwischen 2,2 und 3,2 liegt und wobei gilt: lambda = dem Brenner zugeführter Sauerstoff/stöchiometrisch benötigte Sauerstoffmenge, gamma = dem Brenner zugeführter Wasserstoff/ stöchiometrisch benötigte Wasserstoffmenge und beta = Überschuss Wasser/gebildetes Siliciumdioxid.

4. Verfahren nach Anspruch 3, **dadurch gekennzeichnet, dass** als Siliciumdioxid-Precursor Siliciumtetrachlorid, eine Organochlorsiliciumverbindung und/oder ein Organosilan eingesetzt werden.

5. Verfahren nach den Ansprüchen 3 oder 4, **dadurch gekennzeichnet, dass** zusätzlich Luft und/oder Wasserstoff in die Verbrennungskammer eingespeist wird.

6. Verwendung des flammenhydrolytisch hergestellten Siliciumdioxidpulvers gemäß der Ansprüche 1 oder 2 zu Verwendung des Siliciumdioxidpulvers zur Herstellung von Dispersionen, als Füllstoff in Kautschuk, Silikonkautschuk und Kunststoffen, zur Einstellung der Rheologie in Farben und Lacken, als Träger für Katalysatoren.

## Claims

1. A fumed silica powder having a BET surface area of between 10 and 600 m²/g, **characterized in that** it has a thickening action of at least 3000 mPas and a grindometer value of less than 40 µm, the thickening action being determined by 7.5 g of silica powder being introduced into 142.5 g of a solution of an unsaturated polyester resin in styrene having a viscosity of 1300 +/- 100 mPas at a temperature of 22°C and dispersed by means of a dissolver at 3000 min⁻¹.

2. A fumed silica powder according to claim 1, **characterized in that** the BET surface area is between 50 and 450 m²/g.

3. A process for producing the fumed silica powder of claims 1 or 2, **characterized in that** at least one silica precursor in vapour form is reacted in the presence of a gas containing free oxygen, of a combustion gas and of water vapour, the water vapour being introduced into the premixed gas mixture containing a silica precursor in vapour form, the gas containing free oxygen and a combustion gas through a tube arranged centrally in the burner and surrounded by the feed for the reactants silicon tetrachloride, hydrogen and air and the reaction mixture being reacted in the combustion chamber with attached cooled flame tube, the lambda value being between 1 and 2, the gamma value being between 1 and 2 and the beta value being between 2.2 and 3.2 and each being defined as follows: lambda = the oxygen fed into the burner/stoichiometrically required quantity of oxygen, gamma = the hydrogen fed into the burner/stoichiometrically required quantity of hydrogen, and beta = excess water/silica formed.

4. A process according to claim 3, **characterized in that** silicon tetrachloride, an organochlorosilicon compound and/or an organosilane are used as silica precursor.

5. A process according to claims 3 or 4, **characterized in that** air and/or hydrogen is additionally fed into the combustion chamber.

6. The use of the fumed silica according to claims 1 or 2 for the production of dispersions, as a filler in rubber, silicone rubber and plastics, for adjusting the rheology in paints and lacquers, as a support for catalysts.

## Revendications

1. Poudre de dioxyde de silicium préparée par hydrolyse à la flamme, présentant une surface BET entre 10 et 600 m²/g, **caractérisée en ce qu'**elle présente un effet épaississant d'au moins 3 000 mPa.s et une valeur au Grindomètre inférieure à 40 µm, en introduisant, pour la détermination de l'effet épaississant, 7,5 g de poudre de dioxyde de silicium dans 142,5 g d'une solution d'une résine de polyester insaturée dans du styrène, présentant une viscosité de 1 300 ± 100 mPa.s à une température 22°C et on disperse au moyen d'un dissolveur à 3 000 min-¹.

2. Poudre de dioxyde de silicium préparée par hydrolyse à la flamme selon la revendication 1, **caractérisée en ce que** la surface BET est située entre 50 et 450 m²/g.

3. Procédé pour la préparation de la poudre de dioxyde de silicium préparée par hydrolyse à la flamme selon les revendications 1 ou 2, **caractérisé en ce qu'**on fait réagir au moins un précurseur de dioxyde de silicium sous forme de vapeur en présence d'un gaz contenant de l'oxygène libre, d'un gaz de combustion et de la vapeur d'eau, la vapeur d'eau étant introduite via un tuyau disposé au centre du brûleur, qui est entouré par l'alimentation des partenaires de réaction, le tétrachlorure de silicium, l'hydrogène et l'air, dans le mélange gazeux mélangé au préalable contenant un précurseur du dioxyde de silicium sous forme de vapeur, le gaz contenant l'oxygène libre et un gaz de combustion et le mélange réactionnel est amené à réagir dans la chambre de combustion présentant un tube-foyer refroidi raccordé, la valeur lambda étant située entre 1 et 2, la valeur gamma entre 1 et 2 et la valeur bêta entre 2,2 et 3,2 et où : lambda = oxygène alimenté dans le brûleur/quantité d'oxygène stoechiométriquement nécessaire, gamma = hydrogène alimenté dans le brûleur/quantité d'hydrogène stoechiométriquement nécessaire et bêta = excès d'eau/dioxyde de silicium formé.

4. Procédé selon la revendication 3, **caractérisé en ce qu'**on utilise comme précurseur de dioxyde de silicium du tétrachlorure de silicium, un composé organochlorosilicié et/ou un organosilane.

5. Procédé selon les revendications 3 ou 4, **caractérisé en ce qu'**on introduit en outre de l'air et/ou de l'hydrogène dans la chambre de combustion.

6. Utilisation de la poudre de dioxyde de silicium préparée par hydrolyse à la flamme selon les revendications 1 ou 2 pour l'utilisation de la poudre de dioxyde de silicium pour la préparation de dispersions, comme charge dans le caoutchouc, caoutchouc de silicone et les matériaux synthétiques, pour le réglage de la rhéologie dans les peintures et les laques, comme support pour des catalyseurs.
